(19) Europäisches Patentamt / European Patent Office / Office européen des brevets

(11) **EP 3 867 861 B1**

(12) **EUROPÄISCHE PATENTSCHRIFT**

(45) Veröffentlichungstag und Bekanntmachung des Hinweises auf die Patenterteilung:
**16.04.2025 Patentblatt 2025/16**

(21) Anmeldenummer: **19800920.1**

(22) Anmeldetag: **18.10.2019**

(51) Internationale Patentklassifikation (IPC):
**G06T 5/80** (2024.01)   **G06T 5/20** (2006.01)
**G01B 11/06** (2006.01)   **G01B 11/26** (2006.01)
**G01B 21/04** (2006.01)   **G02B 21/36** (2006.01)

(52) Gemeinsame Patentklassifikation (CPC):
**G06T 5/80; G01B 11/06; G01B 11/26;**
**G01B 21/045; G02B 21/365; G06T 5/20;**
G06T 2207/10056; G06T 2207/30024

(86) Internationale Anmeldenummer:
**PCT/EP2019/078319**

(87) Internationale Veröffentlichungsnummer:
**WO 2020/079206 (23.04.2020 Gazette 2020/17)**

(54) **VERFAHREN ZUR DIGITALEN KORREKTION EINER OPTISCHEN ABBILDUNG EINER PROBE MITTELS EINES MIKROSKOPS UND MIKROSKOP**

METHOD FOR DIGITALLY CORRECTING AN OPTICAL IMAGE OF A SAMPLE BY MEANS OF A MICROSCOPE, AND MICROSCOPE

PROCÉDÉ POUR LA CORRECTION NUMÉRIQUE D'UNE REPRÉSENTATION OPTIQUE D'UN ÉCHANTILLON À L'AIDE D'UN MICROSCOPE ET MICROSCOPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2018 DE 102018125997**

(43) Veröffentlichungstag der Anmeldung:
**25.08.2021 Patentblatt 2021/34**

(73) Patentinhaber: **Leica Microsystems CMS GmbH 35578 Wetzlar (DE)**

(72) Erfinder:
• **SCHUMANN, Christian**
  **35423 Lich (DE)**
• **BAUER, Tobias**
  **61462 Königstein/Ts. (DE)**

(74) Vertreter: **Schaumburg und Partner Patentanwälte mbB Mauerkircherstraße 31 81679 München (DE)**

(56) Entgegenhaltungen:
EP-B1- 1 988 417     DE-A1- 10 250 775
DE-A1- 102017 105 928     US-A1- 2005 265 621
US-A1- 2009 213 717     US-A1- 2017 178 317
US-A1- 2018 018 758     US-B2- 7 489 828

• KAM Z ET AL: "Computational adaptive optics for live three-dimensional biological imaging", PROCEEDINGS OF THE NATIONAL ACADEMY OF SCIENCES, NATIONAL ACADEMY OF SCIENCES, vol. 98, no. 7, 27 March 2001 (2001-03-27), pages 3790 - 3795, XP002610823, ISSN: 0027-8424, DOI: 10.1073/PNAS.071275698
• Y. HIRAOKA ET AL: "Determination of three-dimensional imaging properties of a light microscope system. Partial confocal behavior in epifluorescence microscopy", BIOPHYSICAL JOURNAL, vol. 57, no. 2, 1 February 1990 (1990-02-01), AMSTERDAM, NL, pages 325 - 333, XP055446926, ISSN: 0006-3495, DOI: 10.1016/S0006-3495(90)82534-0

**Beschreibung**

Die Erfindung betrifft ein Verfahren zur digitalen Korrektion einer optischen Abbildung einer Probe mittels eines Mikroskops, wobei das Mikroskop ein die Probe bedeckendes Deckglas hat. Die Erfindung betrifft ferner ein Mikroskop mit einer Einrichtung zur digitalen Korrektion einer optischen Abbildung einer Probe.

Der Haupteinfluss auf die Qualität einer lichtmikroskopischen Abbildung einer Probe sind probenbedingte Abbildungsfehler. Diese lassen sich typischerweise mithilfe spezieller Messverfahren bestimmen. Hierzu sind aus dem Stand der Technik sind Verfahren zur Entfaltung (deconvolution) von in der Fluoreszenzmikroskopie gewonnenen Bilddaten mithilfe von Computerprogrammen bekannt. Bei diesen bekannten Verfahren wird insbesondere ein durch Brechungsindexfehlanpassung induzierter sphärischer Fehler berücksichtigt. Nachteilig bei den bekannten Verfahren ist, das es einer Bedienperson überlassen ist, die zur Bestimmung der Brechungsindexfehlanpassung notwendigen Informationen zu ermitteln und dem Computerprogramm zuzuführen. Weiterhin wird bei den bekannten Verfahren eine Verkippung des Deckglases nicht berücksichtigt.

Die Druckschrift DE 102017105928 A1 beschreibt ein Verfahren zur digitalen Korrektion einer optischen Abbildung einer Probe mittels eines Mikroskops, das ein die Probe bedeckendes Deckglas hat. Durch das Mikroskop kann der Brechungsindex eines an das Deckglas grenzenden optischen Mediums, eine Verkippung des Deckglases und/oder die Dicke des Deckglases bestimmt werden.

Die Druckschrift US 2018/018758 A1 beschreibt eine Positionsbestimmung einer optischen Grenzfläche mittels einer Pupillenfunktion. In der Druckschrift US 2017/178317 A1 ist die Aufnahme von mehreren Mikroskopbildern bekannt, aus deren Teilspektralbildern eine Verzerrungskarte des Gesamtbildes berechnet und entsprechend korrigiert wird. Die Druckschrift US 2005/265621 A1 beschreibt ein Verfahren zur iterativen Berechnung der Punktspreizfunktion bei der blinden Dekonvolution von Mikroskopbildern.

DE 102 50 775 A1 offenbart ein Verfahren zum Ermitteln einer *point spread function* (im folgenden PSF genannt) und einer Dekonvolution einer Abbildung eines Objekts mittels eines Mikroskops auf Grundlage dieser PSF. Bei dem Verfahren wird ein Parameter einer genäherten PDF solange variiert, bis der Vergleich zwischen dem aufgenommenen Bild und dem errechneten Bild positiv ist. Auf Grundlage der so ermittelten PSF kann die Abbildung des Objekts korrigiert werden.

US 7 489 828 B2 offenbart ein Verfahren zum Ermitteln einer PSF und einer digitalen Korrektion einer Abbildung einer Probe mittels eines Mikroskops auf Grundlage dieser PSF. Bei diesem Verfahren wird aus einer Vielzahl von PSFs diejenige PSF ausgewählt, für die eine Kennzahl für die Qualität des Bildes maximal ist. Die bei der Ermittlung dieser PSF verwendete sphärische Aberration wird dann als die in dem Mikroskop tatsächlich vorliegende sphärische Aberration angenommen.

Zum Stand der Technik wird ferner auf Kam et al.: "Computational adaptive optics for live three-dimensional biological imaging", Proceedings of the Nation Academy of Sciences, Bd. 98, Nr. 7, 27. März 2001, Seiten 3790-3795, XP002610823 sowie die EP 1 988 417 B1 verwiesen.

Es ist Aufgabe der Erfindung, ein Verfahren zur digitalen Korrektion einer optischen Abbildung einer Probe mittels eines Mikroskops und ein Mikroskop mit einer Einrichtung zur digitalen Korrektion einer optischen Abbildung einer Probe anzugeben, die eine Korrektion der Abbildung unter Berücksichtigung von messbaren Eigenschaften der Probe und des Probenraums ermöglichen.

Bei dem erfindungsgemäßen Verfahren zur digitalen Korrektion einer optischen Abbildung einer Probe mittels eines Mikroskops, wobei das Mikroskop ein die Probe bedeckendes Deckglas hat, werden durch das Mikroskop der Brechungsindex eines an das Deckglas grenzenden optischen Mediums, eine Verkippung des Deckglases und/oder die Dicke des Deckglases bestimmt, wird auf Grundlage des Brechungsindex des optischen Mediums, der Verkippung des Deckglases und/oder der Dicke des Deckglases ein zu korrigierender Abbildungsfehler in Form einer Pupillen-funktion ermittelt, erfolgt die Abbildung der Probe durch das Mikroskop und werden durch die Abbildung der Probe erfasste Bilddaten auf Grundlage der Pupillenfunktion digital korrigiert.

Erfindungsgemäß werden durch das Mikroskop Eigenschaften der abzubildenden Probe und des Probenraums bestimmt. Aus den durch das Mikroskop bestimmten Eigenschaften wird dann der Abbildungsfehler ermittelt. Dies ist vorteilhaft gegenüber bekannten Verfahren, bei denen eine Ermittlung des Abbildungsfehlers ex-situ, beispielsweise mithilfe eines Referenzpräparates erfolgt, da hier keine Korrelation zwischen dem mithilfe des Referenzpräparates ermittelten Abbildungsfehlers und dem Abbildungsfehler beim Abbilden der Probe sichergestellt werden kann.

Die Ermittlung des Abbildungsfehlers erfolgt beispielsweise durch Modellieren eines Wellenfrontfehlers aus den durch das Mikroskop ermittelten Eigenschaften der Probe und des Probenraums. Modelle zur Berechnung eines Wellenfrontfehlers basierend auf Eigenschaften der Probe und des Probenraums sind beispielsweise aus P. Török et al., "Electromagnetic diffraction of light focused through a planar interface between materials of mismatched refractive indices: an integral representation", J. Opt. Soc. Am. A 12 (1995), 325-332 oder aus S. Stallinga, "Compact description of substrate-related aberrations in high numerical-aperture optical disk readout", Appl. Opt. 44 (2005), 849-858 bekannt.

Aus dem Brechungsindex des an das Deckglas grenzenden optischen Mediums und der Dicke des Deckglases kann der Abbildungsfehler als Pupillenfunktion eines Objektivs bestimmt werden zu

$$\psi(r) = z\sqrt{n_{Spc}^2 - r^2 NA^2} + \Delta d\sqrt{n_{Dgl}^2 - r^2 NA^2} - (z + \Delta d)\sqrt{n_{Imm}^2 - r^2 NA^2}$$

Dabei sind r eine auf den Einheitskreis normierte radiale Koordinate der Austrittpupille des Objektivs, *z* eine mechanische Fokuslänge, $n_{Spc}$ der Brechungsindex des an das Deckglas grenzenden optischen Mediums, $n_{Imm}$ der bekannte Brechungsindex eines weiteren zwischen dem Objektiv und dem Deckglas eingebrachten optischen Mediums, beispielsweise Luft oder ein Immersionsöl, *Δd* eine Abweichung der Deckglasdicke entlang der optischen Achse des Objektivs von der nominellen Deckglasdicke und *NA* die numerische Apertur des Objektivs.

In der Pupillenfunktion sind die wesentlichen Eigenschaften der Abbildung, d.h. das Abbildungsverhalten des durch Probe, Probenraum und Mikroskop gebildeten optischen Systems enthalten. Auf Grundlage der Pupillenfunktion kann somit aus den durch die Abbildung gewonnenen Bilddaten eine Rekonstruktion von Probeneigenschaften, beispielsweise einer räumlichen Verteilung von Fluorophoren oder einer Brechungsindexverteilung erfolgen. Dies ermöglicht eine Korrektion der Abbildung.

Insbesondere ist das optische Medium ein Einbettmedium, in dem die Probe eingebettet wird. Ferner ist zwischen dem Objektiv des Mikroskops und dem Deckglas ein Immersionsmedium angeordnet. Der zu korrigierende Abbildungsfehler wird auf Grundlage des bekannten Brechungsindex des Immersionsmediums ermittelt.

In einer bevorzugten Ausführungsform wird auf Grundlage der Pupillenfunktion ein digitales Filter zur Korrektion der durch die Abbildung der Probe erfassten Bilddaten erzeugt. Dies ist die einfachste Art und Weise einer Korrektion der bei der Abbildung der Probe erfassten Bilddaten. Durch Anwenden des digitalen Filters auf die durch die Abbildung der Probe erfassten Bilddaten erfolgt gleichsam eine Inversion der Abbildung durch das durch Probe, Probenraum und Mikroskop gebildete optische System, wodurch die durch Eigenschaften der Probe und des Probenraums induzierten Abbildungsfehler aus den durch die Abbildung der Probe erfassten Bilddaten entfernt werden können.

In einer vorteilhaften Weiterbildung wird mithilfe des digitalen Filters eine Phaseninformation von durch die Probe emittiertem Detektionslicht rekonstruiert. Aus der Pupillenfunktion können sogenannte inverse Filter für quantitative Phasenrekonstruktionsmethoden werden. Bei quantitative Phasenrekonstruktionsmethoden handelt es sich beispielsweise um bildgebende Verfahren auf Grundlage der Transport of Intensity Gleichung, wie sie beispielsweise in D. Paganin, K. A. Nugent, "Noninterferometric Phase Imaging with Partially Coherent Light", Phys. Rev. Lett. 80 (1998), 2586 beschrieben sind, kohärente Interferenzmikroskopie, die beispielsweise in M. Mir et al., "Quantitaive Phase Imaging", Progress in Optics 57 (2012), 133-217 beschrieben ist, oder Differentielle Phasenkontrast Mikroskopie, die beispielsweise in M. Chen et al., "3D differential phase contrast microscopy", Biomed. Opt. Express 7 (2016), 3940-3950 beschrieben ist. Durch das Rekonstruieren von Phaseninformation lassen sich auch Proben abbilden, die wenig Licht absorbieren, sogenannte Phasenobjekte.

Vorzugsweise wird durch die Abbildung ein Bild einer in der Probe liegenden Ebene erzeugt und das Bild durch eine Inversion der Abbildung auf Grundlage der Pupillenfunktion korrigiert. Bei einer lichtmikroskopischen Abbildung der in der Probe liegenden Ebene sind die Bilddaten insbesondere eine zweidimensionale Matrix bestehend aus Pixeln. Auf die Bilddaten wird ein aus der Pupillenfunktion ermitteltes digitales Filter zur Inversion der Abbildung durch das Mikroskop angewendet.

In einer bevorzugten Ausführungsform werden auf Grundlage der Pupillenfunktion eine Punktspreizfunktion erzeugt und mittels der Punktspreizfunktion eine Entfaltungsoperation auf die durch die Abbildung der Probe erfassten Bilddaten zur Korrektion der Abbildung vorgenommen. Die Punktspreizfunktion gibt an, wie ein ideelles punktförmiges Objekt durch das Mikroskop abgebildet wird. Damit kann sie insbesondere zur Entfaltung von in der Fluoreszenzmikroskopie gewonnenen Bilddaten verwendet werden, wie beispielsweise in Kapitel 25, J. Pawley, "Handbook of biological confocal microscopy", 3. Edition, Springer, ISBN 978-0-387-25921-5 beschrieben. Dabei kann es sich beispielweise um Bilddaten aus Epifluoreszenzmikroskopie, Konfokalmikroskopie oder Multiphotonenmikroskopie handeln. Die Punktspreizfunktion kann aus der Pupillenfunktion mit beispielsweise aus M. Leutenegger et al., "Fast focus field calculations", Opt. Express 14 (2006), 11277-11291 bekannten Verfahren ermittelt werden.

Vorzugsweise werden das Abbilden der Probe und das Korrigieren der durch die Abbildung der Probe erfassten Bilddaten wiederholt durchgeführt. Hierdurch lassen sich entweder mehrere in der Probe liegende Ebenen zur Erzeugung eines dreidimensionalen Bildes oder mehrere Bilder einer einzigen in der Probe liegende Ebene zur Erzeugung eines Videos gewinnen.

In einer bevorzugten Ausführungsform werden durch das Mikroskop eine Verkippung des Deckglases bestimmt und der zu korrigierende Abbildungsfehler auf Grundlage der Verkippung ermittelt. Die Verkippung des Deckglases induziert einen asymmetrischen Abbildungsfehler, der sich mit rein optischen Mitteln nur schwer korrigieren lässt, aber digital gut zu korrigieren ist.

In einer Ausführungsform erfolgt die Abbildung der Probe in mehreren Rasterschritten, in denen jeweils ein Teilbereich der Probe beleuchtet und/oder zur Fluoreszenz angeregt wird. In jedem Rasterschritt wird nur ein punktförmiger Teilbereich der Probe beleuchtet und/oder beispielsweise durch Beleuchten mit Laserlicht zur Fluoreszenz angeregt.

Die Erfindung betrifft ferner ein Mikroskop, mit einem eine Probe bedeckenden Deckglas, wobei das Mikroskop eine Einrichtung zur digitalen Korrektur einer optischen Abbildung der Probe umfasst. Die Einrichtung ist ausgebildet, den Brechungsindex eines an das Deckglas grenzenden optischen Mediums, eine Verkippung des Deckglases und/oder die Dicke des Deckglases zu bestimmen, auf Grundlage des Brechungsindex des optischen Mediums, der Verkippung des Deckglases und/oder der Dicke des Deckglases den zu korrigierenden Abbildungsfehler in Form einer Pupillenfunktion zu ermitteln, und durch die Abbildung der Probe erfasste Bilddaten auf Grundlage der Pupillenfunktion digital zu korrigieren.

Das Mikroskop ist beispielsweise ein Konfokalmikroskop. Alternativ kann es sich bei dem Mikroskop um eine Durchlichtmikroskop oder ein Auflichtmikroskop handeln.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:

Figur 1    eine schematische Darstellung eines Mikroskops als Ausführungsbeispiel; und
Figur 2    ein Flussdiagramm einer Ausführungsform Verfahren zur digitalen Korrektur einer optischen Abbildung einer Probe mittels des Mikroskops nach Figur 1.

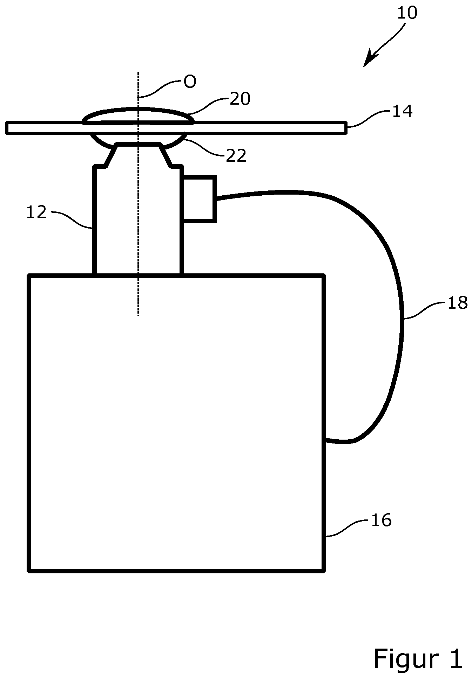

Figur 1 zeigt ein Mikroskop 10 als Ausführungsbeispiel. Das Mikroskop 10 weist ein Objektiv 12 auf, das auf ein Deckglas 14 gerichtet ist. Das Mikroskop 10 umfasst ferner eine Steuereinheit 16, die über ein externes Kabel 18 mit dem Objektiv 12 verbunden ist und welche die verschiedenen Objektivkomponenten ansteuert. Auf dem Deckglas 14 befindet sich ein optisches Medium 20, in das eine Probe eingebettet ist und das im Weiteren als Einbettmedium 20 bezeichnet wird. Zwischen dem Objektiv 12 und dem Deckglas 14 ist ferner ein Immersionsmedium 22 eingebracht.

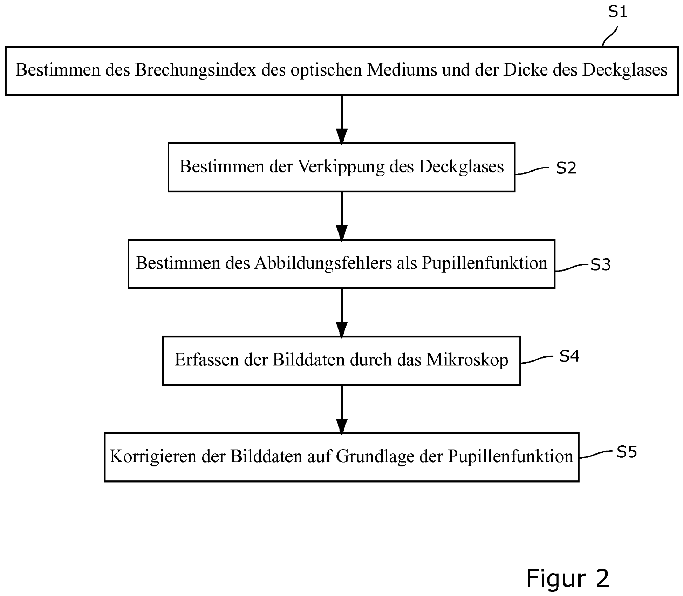

Figur 2 zeigt ein Flussdiagramm einer Ausführungsform des erfindungsgemäßen Verfahrens zur digitalen Korrektur einer optischen Abbildung einer Probe mittels des Mikroskops nach Figur 1.

In einem ersten Schritt S1 wird zunächst die Dicke des Deckglases 14 entlang der optischen Achse O des Objektivs 12 ermittelt. Hierzu wird beispielsweise unter schrägem Einfall ein Messlichtbündel durch das Objektiv 12 auf das Deckglas 14 gelenkt. Durch Teilreflexionen des Messlichtbündels an einer ersten durch das Deckglas 14 und das Immersionsmedium 22 gebildeten optischen Grenzfläche und an einer zweiten durch das Deckglas 14 und das Einbettmedium 20 gebildeten optischen Grenzfläche werden zwei räumlich getrennte Reflexionslichtbündel erzeugt. Die beiden Reflexionslichtbündel werden durch das Objektiv 12 empfangen und auf einen positionssensitiven Detektor gelenkt. Auf Grundlage der erfassten Einfallsorte der beiden Reflexionslichtbündel auf dem positionssensitiven Detektor kann die Dicke des Deckglases ermittelt werden.

Ferner wird im ersten Schritt S1 der Brechungsindex des Einbettmediums 20 ermittelt. Dies kann beispielsweise dadurch erfolgen, dass neben dem Einfallort auch die jeweilige Intensität der beiden Reflexionslichtbündel mittels des positionssensitiven Detektors erfasst werden. Auf Grundlage der erfassten Intensitäten der beiden Reflexionslichtbündel kann der Brechungsindex des Einbettmediums 20 ermittelt werden, da die Intensitäten der beiden Reflexionslichtbündel von der Reflexion und der Transmission des Messlichtbündels an den beiden Grenzflächen abhängen, die durch das Deckglas 14 und das Einbettmedium 20 bzw. das Immersionsmedium 22 definiert sind. Die Reflexions- und Transmissionsvorgänge, auf denen die erfassten Intensitäten der beiden räumlich voneinander getrennten Reflexionslichtbündel beruhen, werden somit wesentlich durch die Brechungsindizes des Deckglases 14 sowie des Einbettmediums 20 und des Immersionsmediums 22 bestimmt.

In einem zweiten Schritt S2 wird eine Verkippung des Deckglases 14 ermittelt. Dazu werden beispielsweise auf einer Oberfläche des Deckglases 14 mindestens drei Messpunkte, die eine Ebene aufspannen, definiert. Für jeden der drei Messpunkte werden folgende Schritte durchgeführt: Lenken eines Messlichtbündels durch das Objektiv 12 auf den Messpunkt; Erzeugen eines Reflexionslichtbündels, indem das Messlichtbündel zumindest zum Teil an dem jeweiligen Messpunkt reflektiert wird; Lenken des Reflexionslichtbündels durch das Objektiv auf einen positionssensitiven Detektor; Erfassen des Einfallsortes des Reflexionslichtbündels auf dem positionssensitiven Sensor; und Ermitteln des Abstands des jeweiligen Messpunktes von dem Objektiv 12 längs dessen optischer Achse O auf Grundlage des erfassten Einfallsortes. Anschließend wird auf Grundlage der ermittelten Abstände eine Verkippung der durch die drei Messpunkte aufgespannten Ebene relativ zur optischen Achse O des Objektivs 12 als Verkippung des Deckglases 14 bestimmt.

In einem dritten Schritt S3 wird aus der Dicke des Deckglases 14, dem Brechungsindex des Einbettmediums 20 und der Verkippung des Deckglases 14 der Abbildungsfehler in Form einer Pupillenfunktion bestimmt als

$$\psi(r,\varphi) = \Delta z \sqrt{n_{Spc}^2 - r^2 NA^2} - (\Delta d + \Delta z)\sqrt{n_{Imm}^2 - r^2 NA^2} + (d +$$

$$\Delta d)\left[\sqrt{n_{Dgl}^2 - \left(r\,NA\,\cos\alpha\cos(\varphi-\varphi_0) - \sin\alpha\sqrt{n_{Imm}^2 - r^2 NA^2}\right)^2 - r^2 NA^2 \sin^2(\varphi-\varphi_0)} -$$

$$r\,NA\,\sin\alpha\cos(\varphi-\varphi_0) - \cos\alpha\sqrt{n_{Imm}^2 - r^2 NA^2}\right] - d\left[\sqrt{n_{Dgl}^2 - r^2 NA^2} -\right.$$

$$\left.\sqrt{n_{Imm}^2 - r^2 NA^2}\right] \qquad (1)$$

Dabei sind r eine auf den Einheitskreis normierte radiale Koordinate der Austrittpupille des Objektivs 12, $\varphi$ die Winkelkoordinate der Austrittpupille des Objektivs 12, z eine mechanische Fokuslänge, $n_{Spc}$ der Brechungsindex des an das Deckglas 14 grenzenden Einbettmediums 20, $n_{Imm}$ der bekannte Brechungsindex des zwischen dem Objektiv 12 und dem Deckglas 14 eingebrachten Immersionsmediums 22, $\Delta d$ die Abweichung der Dicke des Deckglases 14 entlang der optischen Achse O des Objektivs 12 von der nominellen Dicke des Deckglases 14, $NA$ die numerische Apertur des Objektivs 12, $n_{Dgl}$ der Brechungsindex des Deckglases 14, $\alpha$ der Azimut der Verkippung und $\varphi_0$ der Polarwinkel der Verkippung.

In einem vierten Schritt S4 werden durch das Mikroskop 10 Bilddaten durch eine Abbildung der Probe erzeugt.

In einem fünften Schritt S5 werden die Bilddaten auf Grundlage der Pupillenfunktion $\psi(r,\varphi)$ nach obiger Gleichung (1) korrigiert. Beispielsweise wird hierzu aus der Pupillenfunktion $\psi(r,\varphi)$ ein digitales Filter erzeugt, das den Vorgang der Abbildung der Probe durch das Mikroskop 10 gleichsam umkehrt, um den Abbildungsfehler zu korrigieren. Alternativ erfolgt zur Korrektion des Abbildungsfehlers eine Entfaltung (deconvolution) der Bilddaten mittels einer aus der Pupillenfunktion $\psi(r,\varphi)$ gewonnenen Punktspreizfunktion.

Bezugszeichenliste

| | |
|---|---|
| 10 | Mikroskop |
| 12 | Objektiv |
| 14 | Deckglas |
| 16 | Steuereinheit |
| 18 | Kabel |
| 20 | Einbettmedium |
| 22 | Immersionsmedium |
| P1 | Pfeil |

**Patentansprüche**

1. Verfahren zur digitalen Korrektion einer optischen Abbildung einer Probe mittels eines Mikroskops (10), wobei das Mikroskop (10) ein die Probe bedeckendes Deckglas (14) hat,
   wobei

   durch das Mikroskop (10) der Brechungsindex eines an das Deckglas (14) grenzenden optischen Mediums (20), eine Verkippung des Deckglases (14) und/oder die Dicke des Deckglases (14) bestimmt werden,
   **dadurch gekennzeichnet, dass** auf Grundlage des Brechungsindex des optischen Mediums (20), der Verkippung des Deckglases (14) und/oder der Dicke des Deckglases (14) ein zu korrigierender Abbildungsfehler in Form einer Pupillen-funktion ermittelt wird,
   die Abbildung der Probe durch das Mikroskop (10) erfolgt und
   durch die Abbildung der Probe erfasste Bilddaten auf Grundlage der Pupillen-funktion digital korrigiert werden.

2. Verfahren nach Anspruch 1, **dadurch gekennzeichnet, dass** auf Grundlage der Pupillenfunktion ein digitales Filter zur Korrektion der durch die Abbildung der Probe erfassten Bilddaten erzeugt wird.

3. Verfahren nach Anspruch 2, **dadurch gekennzeichnet, dass** mithilfe des digitalen Filters eine Phaseninformation von durch die Probe emittiertem Detektionslicht rekonstruiert wird.

4. Verfahren nach einem der Ansprüche 1 bis 3, **dadurch gekennzeichnet, dass** durch die Abbildung ein Bild einer in der Probe liegenden Ebene erzeugt und das Bild durch eine Inversion der Abbildung auf Grundlage der Pupillenfunktion korrigiert werden.

5. Verfahren nach einem der Ansprüche 1 bis 4, **dadurch gekennzeichnet, dass** auf Grundlage der Pupillenfunktion eine Punktspreizfunktion erzeugt und mittels der Punktspreizfunktion eine Entfaltungsoperation auf die durch die Abbildung der Probe erfassten Bilddaten zur Korrektion der Abbildung vorgenommen werden.

6. Verfahren nach einem der Ansprüche 1 bis 5, **dadurch gekennzeichnet, dass** das Abbilden der Probe und das Korrigieren der durch die Abbildung der Probe erfassten Bilddaten wiederholt durchgeführt werden.

7. Verfahren nach einem der Ansprüche 1 bis 6, **dadurch gekennzeichnet, dass** die Abbildung der Probe in mehreren Rasterschritten erfolgt, in denen jeweils ein Teilbereich der Probe beleuchtet und/oder zur Fluoreszenz angeregt wird.

8. Verfahren nach einem der Ansprüche 1 bis 7, **dadurch gekennzeichnet, dass** das optische Medium (20) ein Einbettmedium ist, in dem die Probe eingebettet wird.

9. Verfahren nach einem der Ansprüche 1 bis 8, **dadurch gekennzeichnet, dass** zwischen einem Objektiv des Mikroskops (10) und dem Deckglas (14) ein Immersionsmedium (22) angeordnet ist und der zu korrigierende Abbildungsfehler auf Grundlage des bekannten Brechungsindex des Immersionsmediums ermittelt wird.

10. Mikroskop, mit einem eine Probe bedeckenden Deckglas (14),

wobei das Mikroskop (10) eine Einrichtung zur digitalen Korrektion einer optischen Abbildung der Probe umfasst, und
die Einrichtung ausgebildet ist, den Brechungsindex eines an das Deckglas (14) grenzenden optischen Mediums (20), eine Verkippung des Deckglases (14) und/oder die Dicke des Deckglases (14) zu bestimmen,
**dadurch gekennzeichnet, dass** die Einrichtung ausgebildet ist, auf Grundlage des Brechungsindex des optischen Mediums, einer Verkippung des Deckglases (14) und/oder der Dicke des Deckglases (14) den zu korrigierenden Abbildungsfehler in Form einer Pupillenfunktion zu ermitteln, und
die Einrichtung ausgebildet ist, durch die Abbildung der Probe erfasste Bilddaten auf Grundlage der Pupillenfunktion digital zu korrigieren.

11. Mikroskop nach Anspruch 10, **dadurch gekennzeichnet, dass** das Mikroskop (10) ein Konfokalmikroskop ist.

**Claims**

1. Method for digitally correcting an optical image of a sample by means of a microscope (10), wherein the microscope (10) has a cover glass (14) covering the sample,
wherein

the refractive index of an optical medium (20) bordering the cover glass (14), a tilt of the cover glass (14) and/or the thickness of the cover glass (14) are determined by the microscope (10),
**characterised in that**, on the basis of the refractive index of the optical medium (20), the tilt of the cover glass (14) and/or the thickness of the cover glass (14), an imaging error to be corrected in the form of a pupil function is determined, the imaging of the sample is performed by the microscope (10) and image data, acquired by the imaging of the sample, are digitally corrected on the basis of the pupil function.

2. Method according to claim 1, **characterised in that**, on the basis of the pupil function, a digital filter is generated for correcting the image data acquired by the imaging of the sample.

3. Method according to claim 2, **characterised in that**, with the aid of the digital filter, phase information of detection light, emitted by the sample, is reconstructed.

4. Method according to any one of claims 1 to 3, **characterised in that**, by an inversion of the imaging on the basis of the pupil function, the imaging produces an image of a plane, lying in the sample, and the image is corrected.

5. Method according to any one of claims 1 to 4, **characterised in that**, on the basis of the pupil function, a point spread function is generated, and by means of the point spread function a deconvolution operation is carried out on the image data acquired by imaging the sample in order to correct the imaging.

6. Method according to any one of claims 1 to 5, **characterised in that** the imaging of the sample and the correction of the image data, acquired by the imaging of the sample, are carried out repeatedly.

7. Method according to any one of claims 1 to 6, **characterised in that** the imaging of the sample takes place in several raster steps, in each of which a partial area of the sample is illuminated and/or excited to fluorescence.

8. Method according to any one of claims 1 to 7, **characterised in that** the optical medium (20) is an embedding medium in which the sample is embedded.

9. Method according to any one of claims 1 to 8, **characterised in that** an immersion medium (22) is arranged between an objective of the microscope (10) and the cover glass (14) and the imaging error to be corrected is determined on the basis of the known refractive index of the immersion medium.

10. Microscope, with a cover glass (14) covering a sample,

wherein the microscope (10) comprises a device for digitally correcting an optical image of the sample, and the device is configured to determine the refractive index of an optical medium (20) bordering the cover glass (14), a tilt of the cover glass (14) and/or the thickness of the cover glass (14),
**characterised in that** the device is configured, on the basis of the refractive index of the optical medium, a tilt of the cover glass (14) and/or the thickness of the cover glass (14), to determine the imaging error to be corrected in the form of a pupil function, and
the device is configured to digitally correct image data, acquired by the imaging of the sample, on the basis of the pupil function.

11. Microscope according to claim 10, **characterised in that** the microscope (10) is a confocal microscope.

## Revendications

1. Procédé de correction numérique d'une reproduction optique d'un échantillon au moyen d'un microscope (10), dans lequel le microscope (10) a une lamelle couvre-objet (14) recouvrant l'échantillon,
dans lequel

l'indice de réfraction d'un milieu optique (20) jouxtant la lamelle couvre-objet (14), un basculement de la lamelle couvre-objet (14) et/ou l'épaisseur de la lamelle couvre-objet (14) sont définis par le microscope (10),
**caractérisé en ce qu'**une erreur de reproduction à corriger sous la forme d'une fonction pupillaire est déterminée sur la base de l'indice de réfraction du milieu optique (20), du basculement de la lamelle couvre-objet (14) et/ou de l'épaisseur de la lamelle couvre-objet (14),
la reproduction de l'échantillon est effectuée par le microscope (10) et des données d'image détectées par la reproduction de l'échantillon sont corrigées numériquement sur la base de la fonction pupillaire.

2. Procédé selon la revendication 1, **caractérisé en ce qu'**un filtre numérique est généré sur la base de la fonction pupillaire pour corriger les données d'image détectées par la reproduction de l'échantillon.

3. Procédé selon la revendication 2, **caractérisé en ce qu'**à l'aide du filtre numérique, une information de phase de la lumière de détection émise par l'échantillon est reconstruite.

4. Procédé selon l'une quelconque des revendications 1 à 3, **caractérisé en ce que** la reproduction permet de générer une image d'un plan situé dans l'échantillon et l'image est corrigée par une inversion de la reproduction sur la base de la fonction pupillaire.

5. Procédé selon l'une quelconque des revendications 1 à 4, **caractérisé en ce que**, sur la base de la fonction pupillaire, une fonction d'écartement de points est générée et une opération de déploiement est réalisée au moyen de la fonction d'écartement de points sur les données d'imagerie détectées par la reproduction de l'échantillon pour corriger la reproduction.

6. Procédé selon l'une quelconque des revendications 1 à 5, **caractérisé en ce que** la reproduction de l'échantillon et la correction des données d'imagerie détectées par la reproduction de l'échantillon sont mises en œuvre de manière répétée.

7. Procédé selon l'une quelconque des revendications 1 à 6, **caractérisé en ce que** la reproduction de l'échantillon est effectuée en plusieurs étapes de trame dans lesquelles une zone partielle de l'échantillon est respectivement éclairée et/ou excitée à la fluorescence.

8. Procédé selon l'une quelconque des revendications 1 à 7, **caractérisé en ce que** le milieu optique (20) est un milieu d'enrobage dans lequel l'échantillon est intégré.

9. Procédé selon l'une quelconque des revendications 1 à 8, **caractérisé en ce qu'**un milieu d'immersion (22) est disposé entre un objectif du microscope (10) et la lamelle couvre-objet (14) et l'erreur de reproduction à corriger est déterminée sur la base de l'indice de réfraction connu du milieu d'immersion.

10. Microscope avec une lamelle couvre-objet (14) recouvrant un échantillon,

dans lequel le microscope (10) comprend un dispositif de correction numérique d'une reproduction optique de l'échantillon, et
le dispositif est réalisé de façon à définir l'indice de réfraction d'un milieu optique (20) jouxtant la lamelle couvre-objet (14), un basculement de la lamelle couvre-objet (14) et/ou l'épaisseur de la lamelle couvre-objet (14), **caractérisé en ce que** le dispositif est réalisé de façon à déterminer l'erreur de reproduction à corriger sous la forme d'une fonction pupillaire sur la base de l'indice de réfraction du milieu optique, d'un basculement de la lamelle couvre-objet (14) et/ou de l'épaisseur de la lamelle couvre-objet (14), et
le dispositif est réalisé de façon à corriger numériquement des données d'image détectées par la reproduction de l'échantillon sur la base de la fonction pupillaire.

11. Microscope selon la revendication 10, **caractérisé en ce que** le microscope (10) est un microscope confocal.

Figur 1

S1

Bestimmen des Brechungsindex des optischen Mediums und der Dicke des Deckglases

Bestimmen der Verkippung des Deckglases — S2

Bestimmen des Abbildungsfehlers als Pupillenfunktion — S3

Erfassen der Bilddaten durch das Mikroskop — S4

Korrigieren der Bilddaten auf Grundlage der Pupillenfunktion — S5

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017105928 A1
- US 2018018758 A1
- US 2017178317 A1
- US 2005265621 A1
- DE 10250775 A1
- US 7489828 B2
- EP 1988417 B1

**In der Beschreibung aufgeführte Nicht-Patentliteratur**

- **KAM et al.** Computational adaptive optics for live three-dimensional biological imaging. *Proceedings of the Nation Academy of Sciences*, 27 March 2001, vol. 98 (7), 3790-3795
- **P. TÖRÖK et al.** Electromagnetic diffraction of light focused through a planar interface between materials of mismatched refractive indices: an integral representation. *J. Opt. Soc. Am. A*, 1995, vol. 12, 325-332
- **S. STALLINGA**. Compact description of substrate-related aberrations in high numerical-aperture optical disk readout. *Appl. Opt.*, 2005, vol. 44, 849-858
- **D. PAGANIN** ; **K. A. NUGENT**. Noninterferometric Phase Imaging with Partially Coherent Light. *Phys. Rev. Lett.*, 1998, vol. 80, 2586
- **M. MIR et al.** Quantitaive Phase Imaging. *Progress in Optics*, 2012, vol. 57, 133-217
- **M. CHEN et al.** 3D differential phase contrast microscopy. *Biomed. Opt. Express*, 2016, vol. 7, 3940-3950
- **J. PAWLEY**. Handbook of biological confocal microscopy. Springer
- **M. LEUTENEGGER et al.** Fast focus field calculations. *Opt. Express*, 2006, vol. 14, 11277-11291